# NEUE EUROPÄISCHE PATENTSCHRIFT

(11) **EP 0 192 672 B2**
(45) Veröffentlichungstag und Bekanntmachung des Hinweises auf die Entscheidung über den Einspruch: **08.12.1993**
(45) Hinweis auf die Patenterteilung: 02.11.1989
(21) Anmeldenummer: 85904085.9
(22) Anmeldetag: 08.08.1985
(51) Int. Cl.: G07C 5/00, G06F 11/22

(54) **VERFAHREN ZUR ÜBERPRÜFUNG VON STEUERGERÄTEN**
METHOD FOR CHECKING CONTROL APPARATUSES
PROCEDE POUR CONTROLER DES APPAREILS DE COMMANDE

(30) Priorität: 04.09.1984 DE 3432430
(43) Veröffentlichungstag der Anmeldung: 03.09.1986
(73) Patentinhaber: ROBERT BOSCH GMBH, 70442 Stuttgart (DE)
(72) Erfinder: PALESCH, Reinhard, D-7143 Vaihingen/Enz 11 (DE)
(86) Internationale Anmeldenummer: DE8500267
(87) Internationale Veröffentlichungsnummer: WO8601620

(56) Entgegenhaltungen:
- EP-A- 0 072 000
- WO-A-80/02608
- WO-A-83/02836
- WO-A-84/02787
- DE-A- 2 554 775
- DE-A- 2 824 190
- DE-A- 3 229 411
- DE-B- 1 082 947
- US-A- 4 017 841
- US-A- 4 401 949

## Beschreibung

Die Erfindung geht aus von einem Verfahren zur Überprüfung von Steuergeräten, insbesondere in Kraftfahrzeugen, nach der Gattung des Hauptanspruches.

Aus der PCT/DE 82/00 149 (WO-A-83/02836) ist bereits ein Verfahren und eine Vorrichtung zur Selbstüberprüfung von mikrorechnergesteuerten Schaltgeräten, insbesondere in Kraftfahrzeugen, bekannt. Die Schaltgeräte führen in Abhängigkeit von angelegten Gebersignalen vorgegebene Funktionen aus und speichern bei Fehlererkennung ein entsprechendes Datenwort ab. Zur Fehlerausgabe wird das Datenwort in einer Signalfolge oder Spannung umgewandelt und durch Spannungsmessung erfaßt. Dies geschieht vorzugsweise dadurch, daß ein Prüfadapter zwischen die Geberleitungen und das Schaltgerat geschaltet wird. An diesem Prüfadapter ist ein Voltmeter anschließbar, das diese Signalfolge oder Spannung anzeigt Einer bestimmten Spannung ist dabei eine bestimmte Fehlerart zugeordnet. Dadurch kann mit einem einfachen, handelsüblichen Voltmeter eine beliebig ausführliche Diagnose eines komplizierten Systems ausgeführt werden. Es ist weiterhin bekannt, diese Signalfolge durch Blinkcodes optisch anzuzeigen, so daß eine Diagnose ohne Voltmeter möglich ist.

Aus der EP 0 072 000 A1 ist ein Diagnosesystem für ein Kraftfahrzeug bekannt. In dem Kraftfahrzeug ist ein Steuersystem mit mehreren Steuercomputern eingebaut. Das Steuersystem ist über einen seriellen Bus mit einer zentralen Überwachungseinheit verbunden. An die zentrale Überwachungseinheit ist eine Anzeigeeinheit über einen weiteren seriellen Bus angeschlossen. Jeder Steuercomputer weist ein Eigendiagnose-Programm auf. Die einzelnen Steuercomputer senden nach Feststellung eines Fehlers eine entsprechende Fehlermeldung an die zentrale Überwachungseinheit ab. Die zentrale Überwachungseinheit sammelt die Fehlermeldungen der einzelnen Steuercomputer, teilt sie in zwei verschiedene Klassen ein und speichert sie in entsprechenden Speicherbereichen ab. Die Fehlermeldungen werden von der zentralen Überwachungseinheit an die Anzeigeeinheit weitergeleitet. Dabei kann über eine Gruppe von Schaltern, die an die zentrale Überwachungseinheit angeschlossen sind, eine Auswahl der unterschiedlichen Klassen von Fehlermeldungen getroffen werden, so daß nur die ausgewählten Fehlermeldungen zur Anzeigeeinheit weitergeleitet werden.

Das erfindungsgemäße Verfahren zur Überprüfung von Steuergeräten mit den kennzeichnenden Merkmalen des Hauptanspruches hat demgegenüber den Vorteil, daß durch eine einmalige Anregung der an der Reizleitung angeschlossenen Steuergeräte durch das Reizsignal eine Kommunikation mit einem Diagnosetester bzw. zur Ausgabe eines Blinkcodes an ein Fehlerausgabegerät veranlaßt wird, ohne daß sich die Steuergeräte dabei gegenseitig behindern.

In den Unteransprüchen sind besonders vorteilhafte Ausgestaltungen der Erfindung angegeben. Der Aufruf des nächsten Steuergerätes kann durch eine Mitteilung vom letzten Steuergerät erfolgen, das zuletzt eine Fehlerausgabe durchgeführt hat. Damit ist eine automatische Überprüfung des nächsten Steuergerates ohne Eingriff einer Testperson gegeben. Es ist aber auch vorteilhaft, daß die Testperson am Testgerät oder am Fehlerausgabegerät das nächste Steuergerät zur Fehlerausgabe aufruft, um damit anzuzeigen, daß seine Fehlerdiagnose für das erste Steuergerät beendet ist. Ein besonders vorteilhaftes, weil besonders einfaches Verfahren zur Prioritätsverteilung unter den Steuergeräten besteht darin, daβ jedes Steuergerät vor der Fehlerausgabe ein Prioritätssignal an die Reizleitung anlegt, dessen zeitliche Dauer proportional zur vorgegebenen Priorität des Steuergerätes ist. Damit erkennt dasjenige Steuergerät mit der höchsten Priorität, daß es als letztes sein Prioritätssignal an der Reizleitung anliegen hat und beginnt darauf mit der Fehlerausgabe. Für dieses Verfahren ist daher keine Datenübertragung zwischen den Steuergeräten oder dem Testgerät erforderlich, weiterhin ist damit nur wenig zusätzlicher Hardwareaufwand verbunden. Während der Fehlerausgabe ist die Reizleitung unbenutzt, so daß sie zur Unterbrechung des Steuergerätes dienen kann, das derzeit eine Fehlerausgabe ausführt. Besonders vorteilhaft ist es dabei, wenn durch ein Reizsignal an der Reizleitung das nächste Steuergerät zur Fehlerausgabe veranlaßt wird.

Ein Ausführungsbeispiel der Erfindung ist in der Zeichnung dargestellt und in der nachfolgenden Beschreibung näher erläutert. Die Figur 1 zeigt hierfür ein Strukturdiagramm, die Figur 2 ein Signaldiagramm zur Erläuterung der Wirkungsweise und die Figur 3 ein Schaltdiagramm für einen Anschluß der Reizleitung an ein Steuergerät.

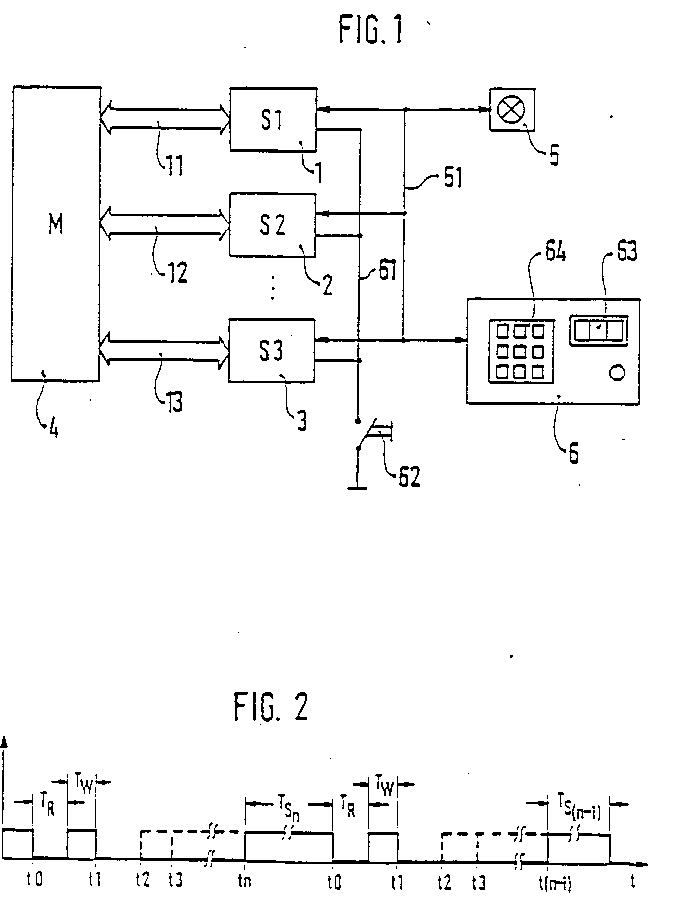

In Figur 1 sind drei Steuergeräte 1, 2, 3 dargestellt, die an eine Brennkraftmaschine 4 mit Verbindungsleitungen 11, 12, 13 angeschlossen sind. Die Verbindungsleitungen stellen Signalleitungen von den Steuergeräten zur Brennkraftmaschine sowie Übertragungsleitungen von an der Brennkraftmaschine 4 angeordneten Gebersignalen zu den Steuergeräten dar. So kann beispielsweise das Steuergerät 1 den Zündzeitpunkt für die Brennkraftmaschine 4 berechnen und dafür von einem Klopfsensor ein Gebersignal erhalten. Das Steuergerät 2 kann entsprechend für eine Getriebesteuerung verantwortlich sein, also einen Schaltvorgang im Getriebe auslösen, wenn dafür ein Gebersignal von einem an der Brennkraftmaschine 4 angeordneten Lastgeber ausreicht. Das Steuergerät 3 kann entsprechend für eine Einspritzung zuständig sein, also Einspritzzeiten zur Ansteuerung von an der Brennkraftmaschine 4 angeordneten Einspritzventilen berechnen, und hierfür etwa Drehzahlsignale von einem an der Brennkraftmaschine 4 angeordneten Drehzahlgeber erhalten. Derartige Strukturen von Steuergeräten an Brennkraftmaschinen, aber auch an anderen Maschinen wie etwa numerisch gesteuerten Werkzeugmaschinen, sind aus dem Stand der Technik bekannt und daher zur Vereinfachung der Darstellung hier nicht näher erläutert.

An die Steuergeräte 1, 2, 3 ist eine Fehleranzeigelampe 5 über eine Übertragungsleitung 51 angeschlossen. Die Fehleranzeigelampe 5 dient zur Anzeige von Blinkcodes. Ein Testgerät 6 ist an die Steuergeräte 1, 2, 3 ebenfalls über die Übertragungsleitung 51 angeschlossen. Das Testgerät 6 weist wenigstens eine Anzeige 63 sowie eine Eingabetastatur 64 auf. Jedes Steuergerät ist mit einer Reizleitung 61 verbunden, die zu einem gemeinsamen Reizschalter 62 führt. Bei geschlossenem Reizschalter 62 ist dabei die Reizleitung 61 an die elektrische Masse gelegt.

Die Brennkraftmaschine 4 ist in einem Kraftfahrzeug untergebracht. Durch den Kraftfahrzeughersteller haben die an die Brennkraftmaschine 4 angeschlossenen Steuergeräte 1, 2, 3 eine jeweils unterschiedliche Priorität zugeteilt bekommen, in deren Reihenfolge sie bei einer Überprüfung ihre Fehlerausgabe durchführen. Innerhalb der Steuergeräte 1, 2, 3 äußern sich jeweils die zugeteilten Prioritäten in zeitlich unterschiedlich langen Impulsen, die über die Reizleitung 61 ausgesendet werden. Das Steuergerät mit der höchsten Priorität sendet also den längsten Impuls aus.

In Figur 2 ist ein Signaldiagramm über eine Zeitachse t aufgetragen. Das Signaldiagramm stellt dabei den logischen Spannungspegel an der Reizleitung 61 dar. Zur Überprüfung der Steuergeräte 1, 2, 3 ist die Fehleranzeigelampe 5 an die Steuergeräte 1, 2, 3 angeschlossen. In besonders vorteilhafter Ausgestaltung ist die Fehleranzeigelampe 5 und der Reizschalter 62 gemeinsam an einer Stelle im Kraftfahrzeug fest angebracht, wobei sie zur Diagnose in einer Kraftfahrzeugwerkstatt herangezogen werden. Die Testperson betätigt nun den Reizschalter 62, so daß die Reizleitung 61 zum Zeitpunkt to für eine Zeit T_{R} auf logisch Null gesetzt wird. Dieser Impuls an der Reizleitung 61 wird von den Steuergeräten 1, 2, 3 erkannt. Nach Ablauf der Zeit T_{R} schließt sich eine Wartezeit T_{W} an, nach der zum Zeitpunkt t1 sämtliche Steuergeräte 1, 2, 3 ihrerseits nun die Reizleitung 61 auf logisch Null setzen. Hieran schließt sich für jedes Steuergerät der ihm durch die vorgegebene Priorität zugeteilte Impuls unterschiedlicher Dauer an. Zum Zeitpunkt t2 koppelt sich also das Steuergerät mit der niedrigsten Priorität von der Reizleitung 61 ab. Da es nach der Abkopplung erkennt, daß das Potential auf der Reizleitung 61 trotz der Abkopplung auf logisch Null bleibt, führt es seine Fehlerausgabe nicht aus. Zum Zeitpunkt t3 koppelt sich das Steuergerät mit der nächst niederen Priorität ab etc. Zum Zeitpunkt tn koppelt sich nun das Steuergerät mit der höchsten Priorität von der ab. Damit ist die Reizleitung 61 weder Reizleitung vom Reizschalter 62 noch von einem Steuergerät auf logisch Null bezogen und geht daher auf logisch Eins. Diese positive Flanke wird vom Steuergerät mit der höchsten Priorität erkannt, worauf dieses während der Zeit T_{Sn} mit der Fehlerausgabe über die Übertragungsleitung 51 zur Fehleranzeigelampe 5 beginnt.

Vom Steuergerät mit der höchsten Priorität wird die Fehleranzeigelampe 5 betätigt, so daß die Testperson am Blinkcode den Fehler erkennen kann. Nach der Fehlerausgabe wird die Reizleitung 61 wieder für eine Zeit T_{R} auf Null gesetzt, womit nach der Prioritätserkennung das Steuergerät mit der zweithöchsten Priorität seine Fehlerausgabe beginnt.

An die Übertragungsleitung 51 kann ein Testgerät 6 angeschlossen werden, das eine komfortable Diagnose ermöglicht. Die Steuergeräte 1, 2, 3 können über die Eingabetastatur 64 so programmiert werden, daß am Ende einer Fehlerausgabe das zuletzt ausgebende Gerät von sich aus die Reizleitung 61 betätigt, worauf automatisch das Steuergerät mit der nächst niederen Priorität die Fehlerausgabe durchführt. Weiterhin kann über die Eingabetastatur 64 die laufende Fehlerausgabe unterbrochen werden und das nächste Steuergerät zur Fehlerausgabe veranlaßt werden. Das ist aber auch möglich, wenn während einer Fehleranzeige der Reizschalter 62 betätigt wird.

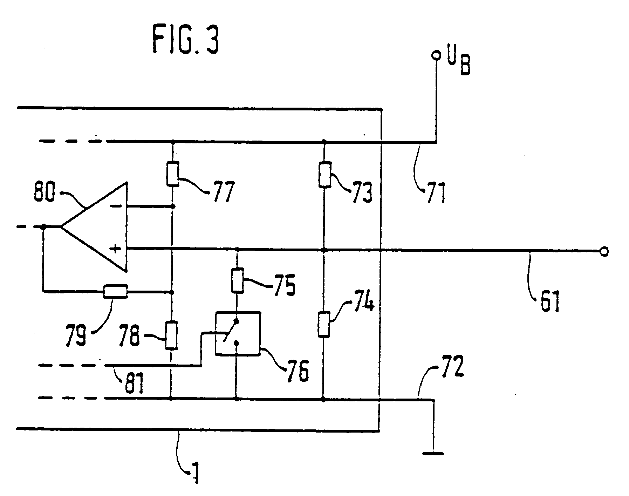

In Figur 3 ist ein Schaltdiagramm dargestellt, das den Anschluß der Reizleitung 61 an das Steuergerät 1 zeigt. Der Anschluß an die anderen Steuergeräte ist im wesentlichen identisch aufgebaut.

Das Steuergerät 1 ist zwischen eine Leitung 71 mit der Versorgungsspannung U_{B} und eine an Masse liegende Leitung 72 geschaltet. Ein erster Spannungsteiler - bestehend aus zwei Widerständen 73, 74 - ist mit der Reizleitung 61 verbunden. Ein Widerstand 75 führt vom Verbindungspunkt auf einen elektronischen Schalter 76. Ein zweiter Spannungsteiler, - bestehend aus zwei Widerständen 77, 78 - ist über einen Widerstand 79 mit dem Ausgang und direkt mit dem Minus-Eingang eines Operationsverstärkers 80 verbunden. Eine Leitung 81 führt auf den Steuereingang des Schalters 76.

Damit ist das Steuergerät 1 in der Lage, mit Hilfe des als Schmitt-Trigger geschalteten Operationsverstärker 80 die logischen Zustände auf der Reizleitung 61 zu erkennen. Durch Ansteuerung des Schalters 76 kann es das Potential auf der Reizleitung 61 selbst auf logisch Null ziehen, wenn es seinen Priontätsimpuls aussendet. Der Widerstand 73 ist ein Pull-Up-Widerstand; der Widerstand 74 dient als Leitungsabschluß. Es liegt jedoch im Rahmen der Erfindung, die gleiche Funktionsweise mit anderen Mitteln zu realisieren, etwa durch Transistoren.

Eine Initialisierung des gesamten Prüfablaufes, d.h. eine Bereitstellung auch des Steuergerätes mit der höchsten Priorität, folgt automatisch mit dem Anlegen der Versorgungsspannung, d. h. mit Betätigen der Zündung im Kraftfahrzeug. Es ist aber auch möglich, das Steuergerät so zu programmieren, daß es mit der Fehlerausgabe beginnt, wenn nach der Zeit T_{W} die Reizleitung 61 nicht auf Masse gezogen wird.

## Patentansprüche

1. Verfahren zur Überprüfung von Steuergeräten, insbesondere in Kraftfahrzeugen, die in Abhängigkeit von Gebersignalen Funktionen ausführen und bei Fehlererkennung ein ensprechendes Datum speichern, wobei zur Fehlerausgabe das Datum in eine Signal oder in eine zeitliche Folge von Signalen umgewandelt wird, die über eine Übertragungsleitung (51) zu einem Testgerät (56) übertragen werden, dadurch gekennzeichnet, daß wenigstens zwei mit einer Reizleitung (61) verbundene Steuergeräte (1, 2, 3) zum Zwecke der Überprüfung durch ein an der Reizleitung (61) anzulegendes Reizsignal angeregt werden, daß die Steuergeräte ihre Fehlerausgabe an das Testgerät in einer durch eine die Steuergerät (1, 2, 3) betreffende vorgegebene Prioritätsverteilung festgelegten Reihenfolge durchführen, wobei eine das Ende einer Fehlerausgabe betreffende Mitteilung erfolgt, um das Steuergerät mit der nächstniederen Priorität zur Fehlerausgabe zu veranlassen.

2. Verfahren nach Anspruch 1, dadurch gekennzeichnet, daß die Mitteilung durch das Steuergerät erfolgt, das zuletzt eine Fehlerausgabe durchgeführt hat.

3. Verfahren nach Anspruch 1, dadurch gekennzeichnet, daß die Mitteilung durch das mit den Steuergeräten in Verbindung stehendes Testgerät (6) erfolgt.

4. Verfahren nach einem der vorhergehenden Ansprüche, dadurch gekennzeichnet, daß die Mitteilung über die Reizleitung (61) erfolgt.

5. Verfahren nach einem der vorhergehenden Ansprüche, dadurch gekennzeichnet, daß nach dem Reizsignal diejenigen Steuergeräte, die noch keine Fehlerausgabe durchgeführt haben, ein Prioritätssignal an die Rekleitung anlegen, dessen zeitliche Dauer proportional zur Priorität des 15 anliegenden Steuergerätes ist, und daß dasjenige Steuergerät die Fehlerausgabe beginnt, dessen Prioritätssignale als letztes an der Reizleitung anliegt.

6. Verfahren nach einem der vorhergehenden Ansprüche, dadurch gekennzeichnet, daß eine Fehlerausgabe durch ein Reizsignal an der Reizleitung (61) unterbrochen wird.

7. Verfahren nach Anspruch 6, dadurch gekennzeichnet, daß nach der Unterbrechung die Fehlerausgabe wiederholt wird.

8. Verfahren nach Anspruch 6, dadurch gekennzeichnet, daß nach der Unterbrechung die Fehlerausgabe abgebrochen wird und die das Ende einer Fehlerausgabe betreffende Mitteilung erfolgt.

9. Verfahren nach einem der vorhergehenden Ansprüche, dadurch gekennzeichnet, daß nach dem Anlegen der Versorgung an die Steuergeräte eine Initialisierung für die Überprüfung durch- 35 geführt wird.

## Claims

1. Method for checking control apparatuses, particularly in motor vehicles, which execute functions as a function of transducer signals and store a corresponding datum when an error is detected, the datum being converted for the purpose of error report into a signal or into a time sequence of signals, which are transmitted to a test apparatus (5,6) via a transmission line (51), characterized in that at least two control apparatuses (1,2,3) connected to an energization line (61) are stimulated for the purpose of the check by an energization signal to be applied to the energization line (61), in that the control apparatuses (1,2,3) carry out their error report on the test apparatus in a sequence determined by a given priority distribution concerning the control apparatuses (1,2,3), a communication relating to the end of an error report being made in order to cause an error report by the control apparatus having the next lower priority.

2. Method according to Claim 1, characterized in that the communication is made by the control apparatus which last executed an error report.

3. Method according to Claim 1, characterized in that the communication is made by the test apparatus (6) connected to the control apparatuses.

4. Method according to one of the preceding claims, characterized in that the communication occurs through the energization line (61).

5. Method according to one of the preceding claims, characterized in that after the energization signal those control apparatuses which have not yet executed an error report apply to the energization line a priority signal, the time duration of which is proportional to the priority of the applying control apparatus, and that the control apparatus, the priority signal of which is applied last to the energization line, commences the error report.

6. Method according to one of the preceding claims, characterized in that an error report is interrupted by an energization signal in the energization line (61).

7. Method according to Claim 6, characterized in that the error report is repeated after the interruption.

8. Method according to Claim 6, characterized in that after the interruption the error report is terminated and the communication relating to the end of an error report is made.

9. Method according to one of the preceding claims, characterized in that an initialization for the check is performed after the application of the supply to the control apparatuses.

## Revendications

1. Procédé pour contrôler des appareils de commande, en particulier dans les véhicules automobiles, qui réalisent des fonctions en dépendance de signaux transmis et mémorisent une donnée correspondante pendant la détection de défaut, après quoi pour l'émission du défaut, la donnée est convertie en un signal ou une suite de signaux successifs qui sont transmis par une ligne de transmission (51) à un appareil de test (56), caractérisé en ce que, au moins deux appareils de commande (1, 2, 3) reliés à une ligne d'excitation (61) sont excités dans le but de contrôle par un signal d'excitation passant sur la ligne d'excitation et les appareils de commande sont amenés à réaliser l'émission de défaut sur l'appareil de test dans un ordre établi par une répartition de priorité donnée, par les appareils de commande (1, 2, 3), une notification concernant la fin d'une émission de défaut se produisant, pour engager l'appareil de commande à priorité plus basse, suivante, à occasionner l'émission de défaut.

2. Procédé selon la revendication 1, caractérisé en ce que la notification est faite par le dernier appareil de commande qui a effectué une émission de défaut.

3. Procédé selon la revendication 1, caractérisé en ce que la notification est faite par l'appareil pour tester (6) se trouvant en liaison avec les appareils de commande.

4. Procédé selon l'une des revendications précédentes, caractérisé en ce que la notification est faite par la ligne d'excitation (61).

5. Procédé selon l'une des revendications précédentes, caractérisé en ce que, après le signal d'excitation, les appareils de commande, qui n'ont encore effectué aucune émission de défaut, établissent un signal de priorité sur la ligne d'excitation, dont la durée chronologique est proportionnelle à la priorité de l'appareil de commande ainsi branché, et en ce que l'appareil de commande dont le signal de priorité sollicite en dernier la ligne d'excitation, commence l'émission.

6. Procédé selon l'une des revendications précédentes, caractérisé en ce qu'un signal d'excitation sur la ligne d'excitation (61) interrompt une émission de défaut.

7. Procédé selon la revendication 6, caractérisé en ce que l'émission de défaut est reprise après l'interruption.

8. Procédé selon la revendication 6, caractérisé en ce que, après l'interruption, l'émission de défaut est arrêtée et la notification concernant la fin d'une émission de défaut se produit.

9. Procédé selon l'une des revendications précédentes, caractérisé en ce que, après le branchement de l'alimentation des appareils de commande, une initialisation pour le contrôle est effectuée.
